# EUROPEAN PATENT SPECIFICATION

(11) **EP 2 939 537 B1**
(45) Date of publication and mention of the grant of the patent: **01.04.2020**
(21) Application number: 13867305.8
(22) Date of filing: 26.12.2013
(51) Int. Cl.: A01M 1/14, A01M 1/02, A01M 1/16

(54) **FLYING INSECT CATCHER**
FLUGINSEKTENFANG
PIÈGE À INSECTES VOLANTS

(30) Priority: 28.12.2012 JP 2012286415
(43) Date of publication of application: 04.11.2015
(73) Proprietor: DAINIHON JOCHUGIKU CO., LTD., Osaka-shi Osaka 550-0001 (JP)
(72) Inventor: HIKITSUCHI Tomoyuki, Toyonaka-shi Osaka 561-0827 (JP); MITSUISHI Honami, Toyonaka-shi Osaka 561-0827 (JP); KANZAKI Tsutomu, Toyonaka-shi Osaka 561-0827 (JP); NAKAYAMA Koji, Toyonaka-shi Osaka 561-0827 (JP)
(74) Representative: Cabinet Beau de Loménie
(86) International application number: PCT/JP2013/084897
(87) International publication number: WO 2014/104197

(56) References cited:
- WO-A2-2004/098279
- DE-C- 374 805
- GB-A- 2 477 806
- JP-A- 2000 060 404
- JP-A- 2002 084 958
- JP-A- 2002 253 102
- JP-A- 2007 110 985
- JP-A- 2009 240 247
- JP-A- 2009 240 247
- US-B1- 6 618 983

## Description

### TECHNICAL FIELD

The present invention relates to flying insect traps for attracting and catching flying insects.

### BACKGROUND ART

A wide variety of types of flying insect traps for attracting and catching flying insects have been so far proposed. An example known flying insect trap contains a water-soluble attracting agent and a catching agent that is fat and oil, with its lid having an entrance that allows insects to enter (see, for example, Patent Document 1). Patent Document 1 describes a flying insect trap that attracts insects into its inside using an attracting agent, and causes fat and oil to cling to the body of the attracted insect and thereby suffocates the insect to death.

Another known flying insect pest trap has an elongated sticky base that sticks to and catches flying insect pests (see, for example, Patent Document 2). Patent Document 2 describes a flying insect pest trap that is used while the elongated base is supported by a support member. The support member holds an attracting agent. When a flying insect pest is attracted by the attracting agent to approach the support member, the body of the flying insect pest is stuck to the sticky portion, so that the flying insect pest is caught.

A still another known insect trap includes a container which accommodates a sheet material coated with an insect catching sticky substance, and an insect attracting part for attracting insects (see, for example, Patent Document 3). Patent Document 3 describes an insect trap that includes an insect attractive color part as the insect attracting part, which has blue polka dots. Patent Document 3 states that, therefore, the trap has a high insect attracting effect. US6618983 (B1) discloses an insect control station for baiting and/or trapping insects that includes a base, a cover, and an insert locked between the base and cover.
GB2477806 (A) describes a fly trap comprising first and second container portions and an adhesive surface disposed in at least one of the first and second container portions.
From WO2004098279 (A2) a further insect trap is known. JP2009240247 (A) discloses an insect capturing sheet wherein the printed part reflects electromagnetic waves having a wavelength band of 300-400 nm.

### CITATION LIST

### PATENT LITERATURE

Patent Document 1: Japanese Unexamined Patent Application Publication No. 2002-272344
Patent Document 2: Japanese Unexamined Patent Application Publication No. 2003-79301
Patent Document 3: Japanese Unexamined Patent Application Publication No. 2002-253101

### SUMMARY OF INVENTION

### TECHNICAL PROBLEM

Flying insect traps are required to simultaneously have the function of attracting insects (insect pests) into the trap and the structural feature that allows insects to easily enter the trap.

In this regard, the flying insect trap of Patent Document 1 uses the attracting agent and the catching agent in liquid form, leading to a structural problem that the liquid is likely to spill or leak. Also, the fat and oil that are used as the catching agent are not inherently insecticidal, and therefore, insects may survive in the trap. In this case, the wet condition in the trap may produce new larvae.

The flying insect pest trap of Patent Document 2 catches flying insect pests by causing them to be stuck to the sticky surface of the base. Therefore, there is not a risk of liquid spill or the like. However, it is not necessarily easy for the user to use the flying insect pest trap. Also, the support member supporting the base, which holds the attracting agent, is almost entirely exposed to the outside (i.e., the base is also almost entirely exposed). Therefore, even if a flying insect pest is attracted by the attracting agent to approach the base, the flying insect pest can easily avoid being caught. Thus, it is not always possible to reliably catch flying insect pests.

The insect trap of Patent Document 3 has large-area openings through which insects are attracted. In addition, the openings face in a direction perpendicular to an attracting mat for catching insects. Moreover, the openings are arranged in parallel with each other along an upward direction away from the attracting mat. Such a structure allows insects attracted into the trap to easily escape from the trap. Also, it is not easy to assemble such an insect trap, and therefore, it is difficult to simplify the package form of the insect trap as a commercial product.

Note that, in some of conventional techniques including Patent Document 3, colors that easily attract insects have been studied. However, it cannot be said that previous studies are enough to specify what combination of colors has a good flying insect attracting effect.

With the above problems in mind, the present invention has been made. It is an object of the present invention to find a combination of colors that is highly attractive to flying insects, and utilize such a combination of colors to provide a flying insect trap having high attracting performance and catching performance.

### SOLUTION TO PROBLEM

To achieve the object, the invention relates to a flying insect trap according to claim 1.
A flying insect trap for attracting and catching a flying insect, includes a sticky sheet which sticks to the flying insect, a main part on which the sticky sheet is placed, a cover part which is attached to cover the sticky sheet, and an entrance provided in the cover part, through which the flying insect enters. When the cover part is attached to the main part, an internal space which accommodates the sticky sheet is formed between the main part and the cover part, and the internal space is in communication with an external environment infested with the flying insect through the entrance. The sticky sheet has an islands-in-sea pattern including a background region having a color of Hue No. n₁ having a value of 4 (reddish orange) to 5 (orange) of the PCCS color wheel, and
a plurality of island-like portions (Q) having a color of Hue No. having a value of n₁+2 to n₁+4 and being limited to a color of Hue No. 7 (reddish yellow) to 9 (greenish yellow) of the PCCS color wheel.

According to the flying insect trap thus configured, when the cover part is attached to the main part, an internal space which accommodates the sticky sheet is formed between the main part and the cover part, and the internal space is in communication with an external environment infested with flying insects through the entrance. Therefore, flying insects attracted to the vicinity of the flying insect trap are likely to enter the internal space, and therefore, can be highly reliably caught.

Here, the present inventors have extensively studied attraction of flying insects to find that flying insects are effectively attracted by an islands-in-sea pattern including a background region having a color of Hue No. n₁ [n₁: 4 (reddish orange) - 6 (yellowish orange)] of the PCCS color wheel and a plurality of island-like portions having a color of Hue No. (n₂ + 2) - (n₂ + 4) [n₂ ← n₁: 6 (yellowish orange) - 10 (yellow-green)] of the PCCS color wheel. Therefore, the sticky sheet which is accommodated in the internal space of the flying insect trap is given the islands-in-sea pattern. As a result, flying insects attracted to the vicinity of the flying insect trap can be reliably guided into the internal space to be efficiently caught.

The flying insect trap having thus configured performs the flying insect attracting function and catching function in association with each other, thereby exhibiting a high synergistic effect, and therefore, may be a useful product.

In the flying insect trap of the present invention, the sticky sheet explicitly has an islands-in-sea pattern including a background region having a color of Hue No. 4-5 of the PCCS color wheel and a plurality of island-like regions having a color of Hue No. 7-9 of the PCCS color wheel.

According to the flying insect trap thus configured, the above more preferable combination of hues is selected as the islands-in-sea pattern possessed by the sticky sheet. Therefore, flying insects approaching the flying insect trap can be reliably attracted into the internal space in which the sticky sheet is provided, to be caught.

In the flying insect trap of the present disclosure, in the islands-in-sea pattern, the island-like portion is preferably a circular portion or elliptical portion having an average diameter of 3-20 mm.

According to the flying insect trap thus configured, in the islands-in-sea pattern, the island-like portion is a circular portion or elliptical portion having an average diameter of 3-20 mm. Therefore, flying insects easily recognize the islands-in-sea pattern. Therefore, flying insects approaching the flying insect trap can be efficiently attracted into the internal space to be caught.

In the flying insect trap of the present disclosure, in the islands-in-sea pattern, the number of the island-like portions in the background region is preferably at least eight.

According to the flying insect trap thus configured, in the islands-in-sea pattern, the number of the island-like portions in the background region is at least eight. Therefore, flying insects easily recognize the islands-in-sea pattern. Therefore, flying insects approaching the flying insect trap can be efficiently attracted into the internal space to be caught.

In the flying insect trap of the present disclosure, the main part and the cover part are preferably connected together by a hinge, and the cover part is preferably attached to the main part by rotating and folding the cover part toward the main part so that the cover part is aligned with the main part.

According to the flying insect trap thus configured, the cover part is only rotated and folded toward the main part so that the cover part is aligned with the main part. Such a simple operation allows the cover part to be attached to the main part. Thus, it is easy to assemble the flying insect trap. Therefore, a package form of the flying insect trap as a commercial product can be simplified. This may contribute to a reduction in cost of the product.

In the flying insect trap of the present disclosure, there are preferably a plurality of the entrances located symmetrically with respect to a perpendicular bisector of a width of the cover part.

According to the flying insect trap thus configured, there are a plurality of the entrances located symmetrically with respect to a perpendicular bisector of a width of the cover part. Therefore, the entrance can have a relatively large opening area. As a result, the flying insect trap is applicable to various flying insects.

In the flying insect trap of the present disclosure, there are preferably a plurality of the entrances located on concentric circles having a center at an intersection of a perpendicular bisector of a width of the cover part and a perpendicular bisector of a length of the cover part.

According to the flying insect trap thus configured, there are a plurality of the entrances located on concentric circles having a center at an intersection of a perpendicular bisector of a width of the cover part and a perpendicular bisector of a length of the cover part. Therefore, the entrances can be uniformly provided throughout a surface of the cover part. As a result, the flying insect trap is applicable to various flying insects.

In the flying insect trap of the present disclosure, each of the entrances preferably has an opening area of 2-12 cm².

According to the flying insect trap thus configured, each of the entrances has an opening area of 2-12 cm². Therefore, for example, the flying insect trap is applicable to flying insects such as small flies, Brachycera, and the like.

The flying insect trap of the present disclosure preferably includes a support portion which supports the cover part when the cover part is attached to the main part, while the cover part is curved in a direction away from the main part.

According to the flying insect trap thus configured, the cover part is supported by the support portion while the cover part is curved, and therefore, a sufficient internal space into which flying insects enter can be ensured.

In the flying insect trap of the present disclosure, the support portion preferably positions the cover part up to 1.5-4 cm away from the main part.

According to the flying insect trap thus configured, the support portion can position the cover part up to 1.5-4 cm away from the main part. Therefore, for example, the flying insect trap is applicable to various flying insects such as small flies, Brachycera, and the like.

The flying insect trap of the present disclosure preferably includes a pressing portion which holds the sticky sheet placed on the main part in place when the cover part is attached to the main part.

According to the flying insect trap thus configured, the sticky sheet placed on the main part can be held in place by the pressing portion. Therefore, for example, even when the flying insect trap is used in an upright position, the sticky sheet is not displaced, and therefore, the flying insect trap can exhibit its functions.

In the flying insect trap of the present disclosure, the main part preferably includes a hook portion for hanging up the flying insect trap.

According to the flying insect trap thus configured, the main part includes a hook portion for hanging up the flying insect trap. Therefore, for example, when the flying insect trap is hung up high using the hook portion, flying insects can be efficiently caught.

In the flying insect trap of the present disclosure, the cover part preferably includes an accommodation portion which accommodates an attracting agent which attracts the flying insect, and the attracting agent preferably contains, as a flying insect attracting component, at least one selected from the groups consisting of acetic acid, fruit vinegars, grain vinegars, fruits, alcoholic beverages, sugars, and flavors thereof.

According to the flying insect trap thus configured, vaporization and diffusion of the flying insect attracting component from the attracting agent accommodated in the accommodation portion of the cover part, and the islands-in-sea pattern of the sticky sheet, can synergistically attract flying insects. Also, due to the use of the above substance as the flying insect attracting component, a high attracting effect can be particularly exhibited on small flies.

In the flying insect trap of the present disclosure, the attracting agent preferably further contains, as a flying insect attracting component, at least one selected from the group consisting of fish sauce and isopropyl alcohol.

According to the flying insect trap thus configured, the above substance is additionally used as a flying insect attracting component. Therefore, a high attracting effect can be exhibited on Brachycera in addition to small flies.

### BRIEF DESCRIPTION OF DRAWINGS

[FIG. 1] FIG. 1 is a diagram for describing how a flying insect trap according to an embodiment of the present invention is used.
[FIG. 2] FIG. 2 is a diagram for describing a procedure for assembling the flying insect trap of the embodiment of the present invention.
[FIG. 3] FIG. 3 is a schematic diagram showing example islands-in-sea patterns applicable to a sticky sheet.
[FIG. 4] FIG. 4 is a diagram for describing how a flying insect trap according to another embodiment is used.

### DESCRIPTION OF EMBODIMENTS

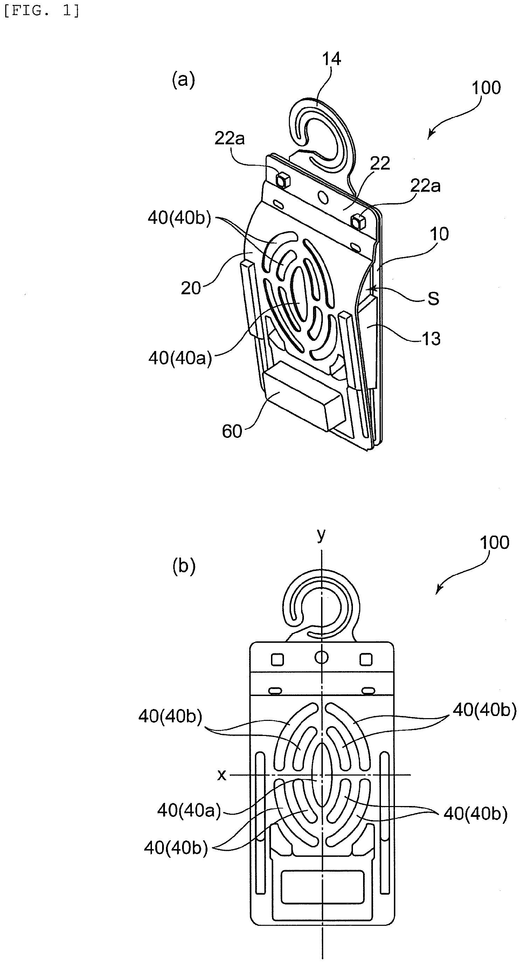

Embodiments of a flying insect trap according to the present invention will now be described with reference to FIGS. 1-4. Note that the present invention is not intended to be limited to the embodiments described below or the drawings.

### [Overall Configuration of Flying Insect Trap]

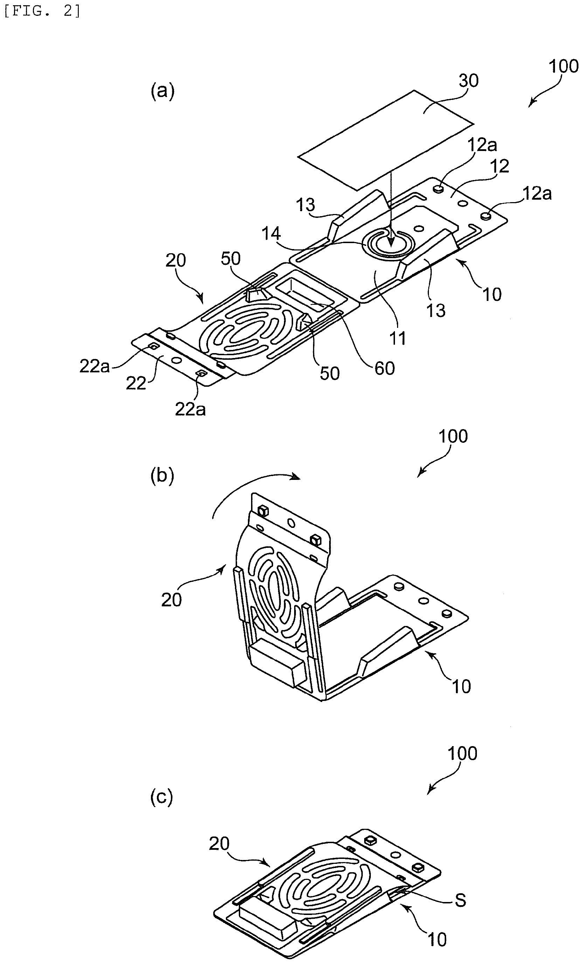

FIG. 1 is a diagram for describing how a flying insect trap 100 according to an embodiment of the present invention is used. FIG. 1(a) is a perspective view of the flying insect trap 100. FIG. 1(b) is a front view of the flying insect trap 100. FIG. 2 is a diagram for describing a procedure for assembling the flying insect trap 100 according to an embodiment of the present invention. FIG. 2(a) is an exploded perspective view of the flying insect trap 100 that is unfolded. FIG. 2(b) is a perspective view the flying insect trap 100 that is assembled halfway. FIG. 2(c) is a perspective view of the flying insect trap 100 that is completely assembled.

The flying insect trap 100 is a device for attracting and catching flying insects such as small flies (e.g., Drosophilidae, Phoridae, Sciaridae, Mycetophilidae, Psychodidae), Brachycera (e.g., Muscidae, Calliphoridae, bluebottle and greenbottle flies, Sarcophagidae), and the like. The flying insect trap 100 is used in an upright position (e.g., it is hung up under the eaves) as shown in FIG. 1.

The flying insect trap 100 includes a main part 10 and a cover part 20 which is attached to the main part 10. As shown in FIG. 2(a), the main part 10 has a flat surface portion 11, on which a sticky sheet 30 which sticks to flying insects is placed. A significant feature of the present invention is the sticky sheet 30, a configuration of which will be described in detail in the "Sticky Sheet" section below. The main part 10 has a main part joint portion 12 at an edge thereof. The main part 10 is joined with the cover part 20 by inserting a convex portion 12a provided on the main part joint portion 12 into a concave portion 22a provided in a cover joint portion 22 of the cover part 20 described below, so that the outer shape of the flying insect trap 100 is formed. Also, the main part 10 has a support portion 13 at each of opposite sides in a width direction of the surface portion 11. The support portions 13 contribute to formation of an internal space S of the flying insect trap 100 described below. Moreover, as shown in FIG. 2(a), a hook 14 is integrally formed with the main part 10. When the hook 14 is folded over the back surface of the main part 10, the flying insect trap 100 can be hung up in use as shown in FIG. 1(a). Note that the flying insect trap 100 may be used without the hook 14 being folded from the main part 10.

The cover part 20 is attached to the main part 10 so that the cover part 20 covers the sticky sheet 30 placed on the main part 10. The cover part 20 has an entrance 40 through which flying insects enter the flying insect trap 100. The entrance 40 may have various shapes and locations. In this embodiment, as shown in FIG. 1(b), a plurality of entrances are located on concentric circles having a center at an intersection of a perpendicular bisector y of a width of the cover part 20 and a perpendicular bisector x of a length of the cover part 20. In FIG. 1(b), the entrances 40 include a central opening 40a and eight curved openings 40b surrounding the central opening 40a, i.e., a total of nine openings. Each opening has an opening area of 2-12 cm², preferably 2-8 cm², and more preferably 2-5 cm². Also, as shown in FIG. 2(a), the cover part 20 has a pressing portion 50 that holds the sticky sheet 30 provided on the main part 10 in place when the cover part 20 is attached to the main part 10. The function of the pressing portion 50 will be described in the next "Assembly of Flying Insect Trap" section. Moreover, the cover part 20 has an accommodation portion 60 for accommodating an attracting agent for attracting flying insects. The attracting agent accommodated in the accommodation portion 60 will be described in detail in the "Attracting Agent" section below.

The main part 10 and the cover part 20 are formed of a material that has good moldability and does not allow a flying insect attracting component (described below) contained in the attracting agent to permeate. Examples of such a material include resin materials such as polyester, polyethylene terephthalate, polybutylene terephthalate, polycarbonate, polystyrene, and the like.

### [Assembly of Flying Insect Trap]

The flying insect trap 100 will be typically sold in a compact and thin package. Therefore, it is necessary to remove the flying insect trap 100 from the package and assemble the flying insect trap 100 before use. The flying insect trap 100 is assembled according to a procedure shown in FIGS. 2(a)- 2(c). As to the flying insect trap 100 before use, the cover part 20 is unfolded with respect to the main part 10. Specifically, as shown in FIG. 2(a), the main part 10 and the cover part 20 are arranged side by side in the length direction, with end portions of the two parts being connected together by a hinge. The sticky sheet 30 is placed on the surface portion 11 of the main part 10 prior to folding. The sticky sheet 30 has a placement surface that contacts the surface portion 11 (the back surface in FIG. 2(a)) and a sticky surface coated with a sticky substance which sticks to the body of a flying insect (the front surface in FIG. 2(a)). The sticky surface is protected by release paper (not shown) until immediately before use. The sticky sheet 30 is placed on the surface portion 11 as follows: a double-sided tape is attached to the surface portion 11; and the sticky sheet 30 is placed on the double-sided tape. Note that the opposite sides of the sticky sheet 30 may be a sticky surface, and one of the sticky surfaces may be directly attached to the surface portion 11. After the sticky sheet 30 is placed on the surface portion 11, the release paper is removed so that the sticky surface is exposed, and the attracting agent is put into the accommodation portion 60 of the cover part 20.

Next, as shown in FIG. 2(b), the cover part 20 is rotated and folded toward the main part 10. If the attracting agent put in the accommodation portion 60 easily flows, the main part 10 may be rotated toward the cover part 20 so that the attracting agent is not spilt.

Moreover, as shown in FIG. 2(c), an end portion of the cover part 20 is aligned with an end portion of the main part 10 so that the convex portion 12a provided on the main part joint portion 12 of the main part 10 is inserted into the concave portion 22a provided in the cover joint portion 22 of the cover part 20, whereby the end portions of the cover part 20 and the main part 10 are joined together. At this time, the pressing portion 50 of the cover part 20 presses a surface of the sticky sheet 30 placed on the main part 10, so that the sticky sheet 30 is held in place. Therefore, the flying insect trap 100 can be used in an upright position. Note that the surface of the sticky sheet 30 that the pressing portion 50 is made contact with may be a non-sticky surface which is not coated with a sticky substance, for the purpose of usability.

The main part 10 further has the two support portions 13 at the opposite sides in the width direction of the surface portion 11. Each support portion 13 projects from the main part 10 by about 1.5-4 cm. When the cover part 20 is attached to the main part 10, the cover part 20 is supported by the support portions 13 while the cover part 20 is curved in a direction away from the main part 10. This forms the internal space S surrounded by the sticky sheet 30 provided on the surface portion 11 of the main part 10 and the curved surface of the cover part 20. The internal space S is in communication with an external environment infested with flying insects, through the entrance 40 provided in the cover part 20. Here, the support portion 13 is preferably placed at a position closer to the cover joint portion 22 than to the center in the length direction of the cover part 20. Such a placement of the support portion 13 allows a top portion of the curved surface of the cover part 20 to be located closer to the top of the flying insect trap 100 as it is in an upright position, so that the top portion is conspicuous, and therefore, flying insects are more likely to enter the internal space S. The internal space S is designed to have the following dimensions: 6-15 cm in width; 10-20 cm in length; and up to 1.5-4 cm in height (a distance from the sticky sheet 30 to the entrance 40) .

Thus, the flying insect trap 100 is easy to assemble, and a package form thereof as a commercial product can be simplified. This may contribute to a reduction in cost of the product.

### [Sticky Sheet]

In the present invention, the sticky sheet 30 has not only the function of sticking to the body of a flying insect to catch the flying insect, but also the function of attracting flying insects into the internal space S of the flying insect trap 100. The present inventors have extensively studied attraction of flying insects to find that the sticky sheet 30 that is given an islands-in-sea pattern having a combination of specific colors can effectively attract flying insects. The present inventors' study has discovered a new finding that flying insects are effectively attracted by an islands-in-sea pattern including a background region P having a color of Hue No. n₁ [n₁: 4 (reddish orange) - 6 (yellowish orange)] of the PCCS color wheel and a plurality of island-like portions Q having a color of Hue No. (n₂ + 2) - (n₂ + 4) [n₂ ← n₁: 6 (yellowish orange) - 10 (yellow-green)] of the PCCS color wheel. Here, the term "n₂ ← n₁" means that if the value of n₁ is determined, the value of n₁ is substituted for n₂. Also, the PCCS color wheel is a circular array of 24 hues perceptually equally spaced including 4 primary colors, i.e., 2 (red), 8 (yellow), 12 (green), and 18 (blue), as bases, and 20 intermediate colors interpolating the four primary colors. In an example islands-in-sea pattern given to the sticky sheet 30, if the background region P has a color of Hue No. n₁ = 4 (reddish orange), the island-like portion Q has a color of Hue No. (n₂ + 2) = 4 + 2 = 6 (yellowish orange) to Hue No. (n₂ + 4) = 4 + 4 = 8 (yellow), where "4" that is the value of n₁ is substituted for n₂. Alternatively, if the background region P has a color of Hue No. n₁ = 6 (yellowish orange), the island-like portion Q has a color of Hue No. (n₂ + 2) = 6 + 2 = 8 (yellow) to Hue No. (n₂ + 4) = 6 + 4 = 10 (yellow-green), where "6" that is the value of n₁ is substituted for n₂. As to the color combination of the islands-in-sea pattern, it is particularly preferable that the background region have a color of Hue No. 4-5 of the PCCS color wheel and the island-like region have a color of Hue No. 7-9 of the PCCS color wheel. If the sticky sheet 30 has such an islands-in-sea pattern of colors, flying insects attracted to the vicinity of the flying insect trap 100 can be reliably guided into the internal space S to be efficiently caught (this will be described in greater detail in examples below). The flying insect trap 100 of this embodiment performs the flying insect attracting function and catching function in association with each other, thereby exhibiting a high synergistic effect.

In the islands-in-sea pattern including the background region P and the island-like portions Q, the number of the island-like portions Q in the background region P is preferably at least eight. Also, the island-like portion Q is preferably a circular or elliptical portion having an average diameter of 3-20 mm. Here, the "circular portion" does not need to have a strictly definite shape, and may only appear to be circular. Therefore, the "circular portion" encompasses a generally circular portion in addition to a geometrically perfect circle. Similarly, the "elliptical portion" encompasses a generally elliptical circle in addition to a geometrically perfect ellipse. Note that if the island-like portion Q is an elliptical portion, the average diameter is an average length of the major axis and the minor axis. Such an islands-in-sea pattern is easily recognized by flying insects. Therefore, when a flying insect approaches the flying insect trap 100, the flying insect can visually recognize the islands-in-sea pattern through the entrance 40. As a result, flying insects can be efficiently attracted into the internal space S and caught by the sticky sheet 30.

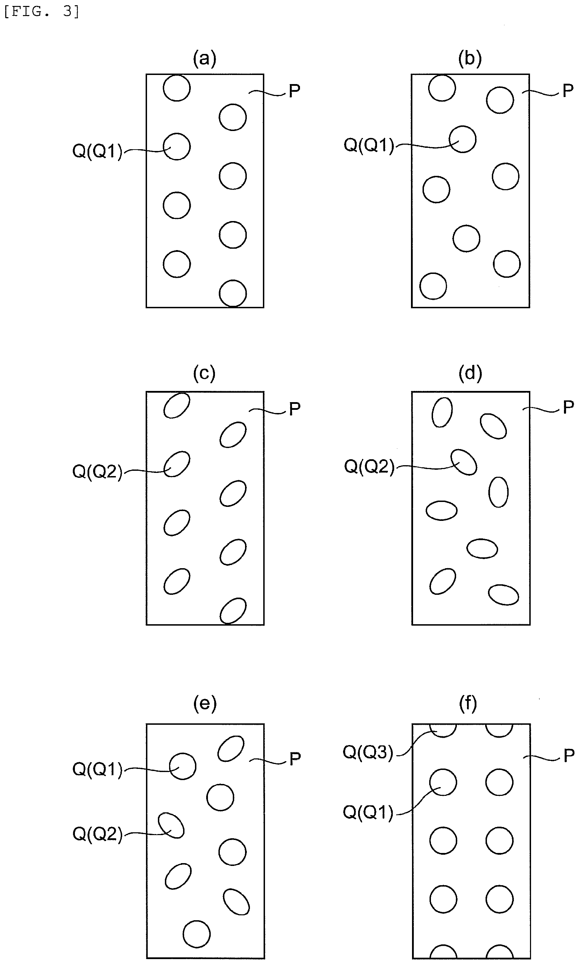

There may be a number of variations of the islands-in-sea pattern. FIG. 3 is a schematic diagram showing example islands-in-sea patterns applicable to the sticky sheet 30. FIG. 3(a) shows a most typical islands-in-sea pattern in which eight circular island-like portions Q1 are arranged in two rows of four island-like portions Q1 each in a rectangular background region P in portrait position. The circular island-like portions Q1 in the two rows are not horizontally aligned, or alternatively, may be horizontally aligned. In FIG. 3(b), eight circular island-like portions Q1 are randomly arranged in a rectangular background region P in portrait position. In FIG. 3(c), eight elliptical island-like portions Q2 are arranged in two rows of four island-like portions Q2 each in a rectangular background region P in portrait position. The elliptical island-like portions Q2 in the two rows are not horizontally aligned, or alternatively, may be horizontally aligned. Also, the major axes of the elliptical island-like portions Q2 have different orientations. In FIG. 3(d), eight elliptical island-like portions Q2 are randomly arranged in a rectangular background region P in portrait position. In FIG. 3(e), four circular island-like portion Q1 and four elliptical island-like portions Q2 are randomly arranged in a rectangular background region P in portrait position. The number of the circular island-like portions Q1 may be different from the number of the elliptical island-like portions Q2. In FIG. 3(f), six circular island-like portions Q1 and four semi-circular island-like portions Q3 are arranged in two rows in a rectangular background region P in portrait position. In this case, the entirety of the island-like portions Q is equivalent to an arrangement of eight circular island-like portions Q1. Thus, even when a portion of the island-like portions Q are not perfect, then if the number of all the island-like portions Q is at least a predetermined value, an effect similar to that of a normal islands-in-sea pattern can be obtained.

Flying insects that have entered the internal space S through the entrance 40 of the flying insect trap 100 and have been attracted by the islands-in-sea pattern of the sticky sheet 30 are stuck to the sticky substance of the sticky sheet 30 and are thereby caught. The sticky substance is not particularly limited. Any sticky substance that allows the islands-in-sea pattern of the sticky sheet 30 to be visually recognized from the side where the sticky substance is provided (i.e., any sticky substance that has a predetermined transparency) may be employed. Examples of such a sticky substance include rubber sticky substances, acrylic sticky substances, silicone sticky substances, and the like. Examples of the rubber sticky substances include natural rubber sticky substances, styrene-butadiene rubber sticky substances, reclaimed rubber sticky substances, polyisobutylene-butylene rubber sticky substances, block copolymer sticky substances, and the like. These sticky substances may be used alone or in combination. Moreover, a softener, antioxidant, cross-linking agent, or the like may be optionally added to the sticky substance.

### [Attracting Agent]

As described above, the flying insect trap 100 of this embodiment can attract flying insects entering the internal space S using the islands-in-sea pattern of the sticky sheet 30. In addition, it is effective to use an attracting agent in combination with the islands-in-sea pattern in order to cause flying insects infesting outside the flying insect trap 100 to approach the flying insect trap 100. The flying insect trap 100 has the accommodation portion 60 in the cover part 20. Therefore, if an attracting agent that attracts flying insect is accommodated in the accommodation portion 60, the attracting agent spreads through the internal space S, and moreover, diffuses into the external environment through the entrance 40 in the form of a vapor. As a result, the attracting agent and the islands-in-sea pattern of the sticky sheet 30 can synergistically attract flying insects. Attracting agents that can be used in the flying insect trap 100 of the present invention will now be described.

The form of the attracting agent is preferably gel, which reduces or prevents spilling or leakage of the attracting agent from the accommodation portion 60. The gel attracting agent is obtained by gelling a liquid product containing a flying insect attracting component as an effective component using a gelling agent. Examples of the flying insect attracting component include acetic acid, fruit vinegars, grain vinegars, fruits, alcoholic beverages, sugars, and flavors thereof, and the like. These flying insect attracting components are particularly effective to small flies. Examples of the acetic acid include typical synthetic vinegars. Examples of the fruit vinegars include balsamic vinegar, wine vinegar, sudachi (a Japanese citrus) vinegar, and the like. Examples of the grain vinegars include black vinegar, rice vinegar, and the like. For the fruit vinegars and grain vinegars, their flavors may be used, which can reduce the amount of the material used and thereby avoid a risk of unstable supply of such a natural material. Examples of the fruits include apples, bananas, melons, oranges, mangos, kiwi fruits, and the like. Examples of the alcoholic beverages include beer, whisky, Shaoxing wine, sake, shochu (a Japanese distilled beverage), rum, and the like. Examples of the sugars include starch, muscovado, glucose, sucrose, brown sugar, liquid sugar, dextrin, maltose, fructose, arabinose, and the like. Also, examples of the flavors include beer flavors, balsamic vinegar flavors, apple flavors, and the like. Moreover, fish sauce, isopropyl alcohol, and the like are also effective flying insect attracting components. These are particularly effective to Brachycera. These components, which can be effectively used alone, exhibit a synergistic effect when they are used in combination with other attracting agents. The above flying insect attracting components can be used alone or in combination.

An aroma chemical component that has an attracting effect may be optionally added to the flying insect attracting component. Examples of the aroma chemical component include propylene glycol monoacetate, propionaldehyde propylene glycol acetal, 2-methylbutyl acetate, phenyl acetate, isobutyl acetate, 2-methyl butanol, diethyl succinate, methionol, octanoic acid, 4-methoxymethyl phenol, isoamyl alcohol, benzaldehyde, 2-methyl butyrate, isovaleraldehyde propylene glycol acetal, 2-ethyl hexanoate, acetaldehyde propylene glycol acetal, methyl thiobutyrate, methional, benzoic acid, hexanal, 2,3,5-trimethyl pyrazine, 2,3-pentanedione, dimethyl sulfide, tetramethyl pyrazine, 2-tridecanone, 2-nonanone, vinylguaiacol, 4-ethylguaiacol, and the like. These aroma chemical components may be used alone or in combination.

Moreover, additional components (including components used as a flying insect attracting component) such as lactic acid products, processed fruit products, vegetable extracts, fish, processed fish products, fish extracts, meat, processed meat products, food extracts, and the like may be added to the flying insect attracting component. Examples of the lactic acid products include lactic acid bacteria beverages, such as Calpis (registered trademark), Yakult (registered trademark), and the like, yogurts, cheeses, and the like. Examples of the processed fruit products include fruit juices, fruit jellies, dried fruits, and the like. Examples of the vegetable extracts include onion flavors, cabbage flavors, and the like. Examples of the fish include mackerel, skipjack tuna, sardines, tuna, squid, and the like. Examples of the processed fish products include smoked skipjack tuna, smoked mackerel, stockfish, fishmeal, processed roe products, and the like. Examples of the fish extracts include smoked skipjack tuna flavors, smoked mackerel flavors, shrimp flavors, crab flavors, and the like. Examples of the meat include beef, pork, chicken, and the like. Examples of the processed meat products include ham, sausage, bacon, grilled meat, and the like. Examples of the food extracts include beef extracts, pork extracts, chicken extracts, beef flavors, pork flavors, chicken flavors, animal fats and oils, and the like. The above additional components may be used alone or in combination.

Examples of the gelling agent which is used to gel a liquid product containing the flying insect attracting component include water-soluble polysaccharides and/or water absorbent resins. Examples of the water-soluble polysaccharides include guar gum, xanthan gum, lambda carrageenan, gellan gum, gum arabic, locust bean gum, sodium alginate, and the like. Of them, guar gum, xanthan gum, and lambda carrageenan, which have a good attracting effect and are easy to manufacture, are preferably employed. Examples of the water absorbent resins include isobutylene-maleic anhydride copolymers, polyacrylate polymers, starch-polyacrylate polymers, PVA-polyacrylate polymers, PVA polymers, carboxymethyl cellulose polymers, and the like. The above gelling agents may be used alone or in combination. The gelling agents may be used in solution form where water is a solvent.

Other components may be optionally added to the gel attracting agent in addition to the above components. Examples of the other components include dietary components such as wheat flour, mushrooms, roasted soybean flour, dried yeast, and the like, base components, solvents such as ethanol (e.g., fermented ethanol, synthetic ethanol) and the like, and various auxiliary components such as fungicides, preservatives, anti-mold agents, stabilizers, surfactants, dispersants, sweeteners, bittering agents, pH adjusting agents, colorants, and the like. The above additional components may be used alone or in combination.

An insecticidal component may be added to the gel attracting agent in an amount within the range that does not have an influence on the attracting capability. Examples of the insecticidal component include pyrethroid insecticidal components such as natural pyrethrin, allethrin, flumethrin, prallethrin, resmethrin, phthalthrin, transfluthrin, phenothrin, cyphenothrin, permethrin, etofenprox, and the like; organic silicon insecticidal components such as silafluofen and the like; neonicotinoid insecticidal components such as dinotefuran, imidacloprid, clothianidin, thiamethoxam, and the like; organic phosphorus insecticidal components such as fenitrothion, diazinon, malathion, prothiofos, and the like; oxadiazole insecticidal components such as metoxadiazone and the like; pyrazole insecticidal components such as fipronil and the like; insect growth regulators such as pyriproxyfen, hydroprene, and the like; and the like. These insecticidal components may be used alone or in combination.

The gel attracting agent is a formulation that has the following representative composition: 1.0-5.0% by mass of acetic acid; 0.05-4.0% by mass of vinegar flavors (a balsamic vinegar flavor, etc.) and fruit and/or alcoholic beverage flavors (an apple flavor, beer flavor, etc.); 10-30% by mass of muscovado; 1.0-5.0% by mass of xanthan gum; and water, based on the total amount of the attracting agent. The gel attracting agent thus formulated at the above mixture ratio exhibits a high flying insect attracting effect. Note that the mass (dose) of the gel attracting agent is preferably about 10 g, although it varies depending on the volume of the accommodation portion 60. After the gel attracting agent is put into the accommodation portion 60, the gel attracting agent is optionally covered by a nonwoven fabric or perforated filter placed at an opening of the accommodation portion 60, whereby dissipation of the gel attracting agent to the outside of the accommodation portion 60 is reduced or prevented, and the rate of vaporization and diffusion of the flying insect attracting component of the gel attracting agent is adjusted.

### [Other Embodiments]

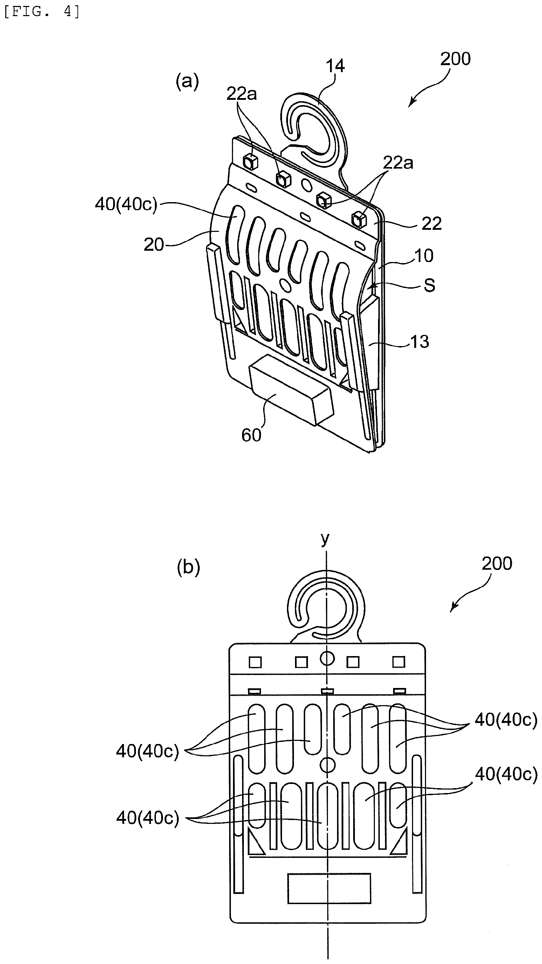

FIG. 4 is a diagram for describing how a flying insect trap 200 according to another embodiment is used. FIG. 4(a) is a perspective view of the flying insect trap 200. FIG. 4(b) is a front view of the flying insect trap 200. The flying insect trap 200 of this alternative embodiment is particularly directed to Brachycera as a flying insect to be caught.

As with the flying insect trap 100 shown in FIGS. 1 and 2, the flying insect trap 200 includes a main part 10 and a cover part 20 which is attached to the main part 10, and a sticky sheet 30 which sticks to flying insects is placed on the main part 10. A shape and arrangement of an entrance 40 provided in the cover part 20 are different from those of the flying insect trap 100. Brachycera is longer than small flies. Therefore, it is particularly effective to increase the size of the entrance 40. In this alternative embodiment, as shown in FIG. 4(b), a plurality of entrances 40 are located symmetrically with respect to a perpendicular bisector y of a width of the cover part 20. In FIG. 4(b), the entrances 40 are eleven elongated openings 40c arranged in a matrix. Each opening has an opening area of 3-6 cm². The elongated opening 40c of the flying insect trap 200 has a relatively large opening area, whereby Brachycera can be effectively attracted and caught. Note that it is advantageous to arrange the elongated openings 40c in parallel with a length direction of the cover part 20 as shown in FIG. 4(b) because of ease of manufacture. Alternatively, the elongated openings 40c may be arranged obliquely to the length direction of the cover part 20 or may have random orientations.

### Examples

### <Small Fly Catching Test>

A small fly catching test was conducted on the flying insect trap of the present invention using Megaselia spiracularis, which is a member of the small flies, as a flying insect. As shown in Table 1, flying insect traps containing a sticky sheet that has a combination of colors according to the present invention (Examples 1-7) and flying insect traps containing a sticky sheet that does not have a combination of colors according to the present invention (Comparative Examples 1-3) were prepared. These flying insect traps had an internal space having a width of about 11 cm, a length of about 18 cm, and a height of up to about 2 cm. The entrance had a size of 2-12 cm². Each flying insect trap, which had an attracting agent containing flying insect attracting components shown in Table 1, was subjected to the small fly catching test.

Each flying insect trap was placed at the center of the floor of a test chamber (1.8 m long × 1.8 m wide × 1.8 m high). One hundred flying insects of Megaselia spiracularis were released into the chamber. After 24 hours, the number of Megaselia spiracularis insects caught by the sticky sheet was counted. The same catching test was conducted three times, and the average number of insects caught was calculated. The result of the test is shown in Table 1.

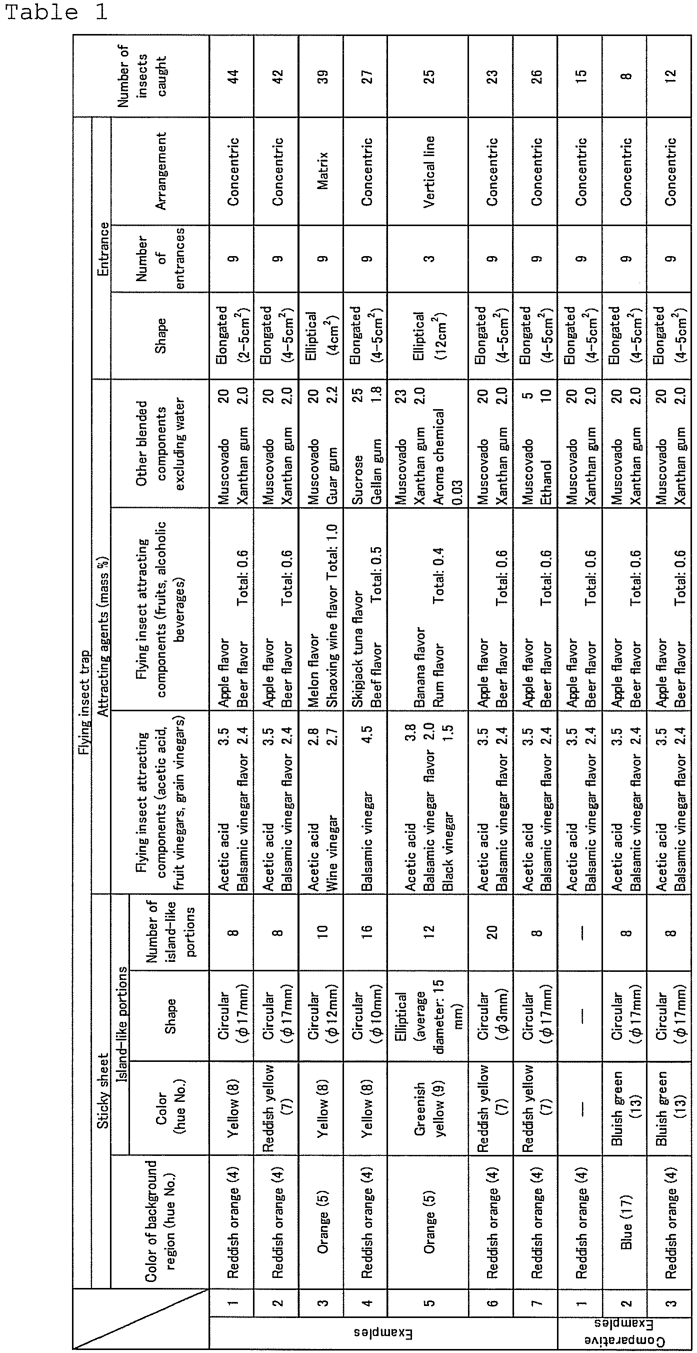

In the case of the flying insect traps of Examples 1-7, the number of Megaselia spiracularis insects caught was at least 23, which shows sufficient catching performance. In particular, in the case of an islands-in-sea pattern including a background region having a color of Hue No. 4 (reddish orange) and an island-like portion having a color of Hue No. 7 (reddish yellow) or Hue No. 8 (yellow) (Examples 1 and 2), the number of Megaselia spiracularis insects caught was at least 40, which shows good catching performance. Thus, it was demonstrated that the use of a sticky sheet having a combination of colors according to the present invention in the flying insect trap can effectively attract Megaselia spiracularis, which is a member of the small flies.

On the other hand, in the case of the flying insect traps of Comparative Examples 1-3, the number of Megaselia spiracularis insects caught was no more than 20, which shows insufficient catching performance. Although the flying insect traps of the comparative examples had an attracting agent containing flying insect attracting components (Comparative Examples 1-3), the catching performance of the flying insect traps of the comparative examples was inferior to that of Examples 1-7 because the flying insect traps of the comparative examples contained a sticky sheet which did not have a combination of colors according to the present invention.

### <Brachycera Catching Test>

A Brachycera catching test was conducted on the flying insect trap of the present invention using Muscidae, which is a member of Brachycera, as a flying insect. As shown in Table 2, flying insect traps containing a sticky sheet that has a combination of colors according to the present invention (Examples 8-17) and flying insect traps containing a sticky sheet that does not have a combination of colors according to the present invention (Comparative Examples 4-7) were prepared. These flying insect traps had an internal space having a width of about 11 cm, a length of about 18 cm, and a height of up to about 2 cm. The entrance had a size of 2-12 cm². Each flying insect trap, which had an attracting agent containing flying insect attracting components shown in Table 2 (except for Example 13 and Comparative Example 7), was subjected to the Brachycera catching test.

Each flying insect trap was placed at the center of the floor of a test chamber (1.8 m long × 1.8 m wide × 1.8 m high). One hundred flying insects of Muscidae were released into the chamber. After 24 hours, the number of Muscidae insects caught by the sticky sheet was counted. The same catching test was conducted two times, and the average number of insects caught was calculated. The result of the test is shown in Table 2.

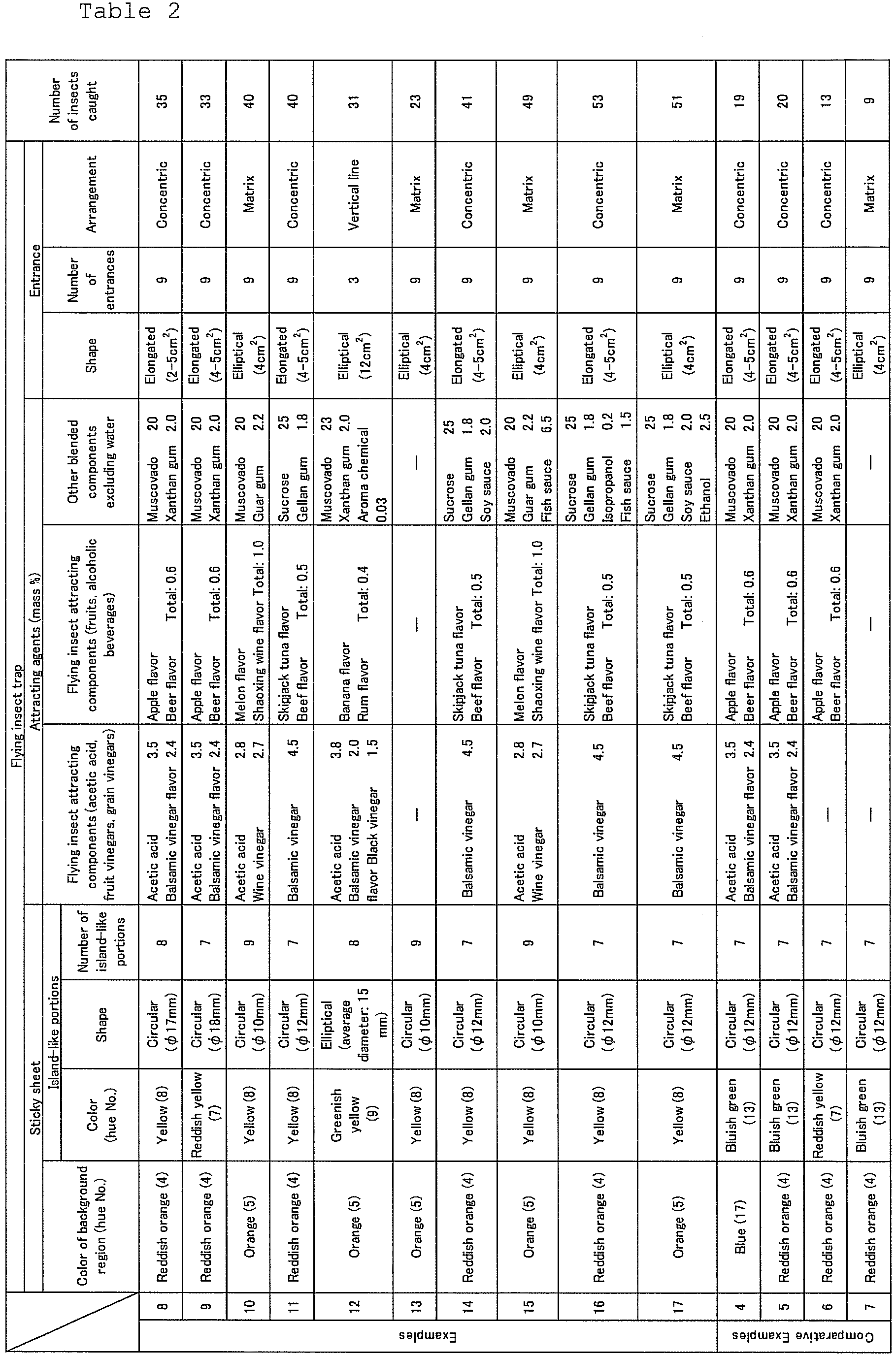

In the case of the flying insect traps of Examples 8-17, the number of Muscidae insects caught was at least 23, which shows sufficient catching performance. In particular, in the case of an islands-in-sea pattern including a background region having a color of Hue No. 4 (reddish orange) or Hue No. 5 (orange) and an island-like portion having a color of Hue No. 8 (yellow) (Examples 10, 11, and 14-17), the number of Muscidae insects caught was at least 40, which shows good catching performance. Thus, it was demonstrated that the use of a sticky sheet having a combination of colors according to the present invention in the flying insect trap can effectively attract Muscidae, which is a member of Brachycera.

On the other hand, in the case of the flying insect traps of Comparative Examples 4-7, the number of Muscidae insects caught was no more than 20, which shows insufficient catching performance. Although the flying insect traps of the comparative examples had an attracting agent containing flying insect attracting components (Comparative Examples 4-6), the catching performance of the flying insect traps of the comparative examples was inferior to that of Examples 8-17 because the flying insect traps of the comparative examples contained a sticky sheet which did not have a combination of colors according to the present invention.

### INDUSTRIAL APPLICABILITY

The flying insect trap of the present invention is applicable not only to flying insects such as small flies, Brachycera, and the like, but also to other flying insects such as Chironomidae, bees, and the like.

### REFERENCE SIGNS LIST

- 10: MAIN PART
- 13: SUPPORT PORTION
- 14: HOOK PORTION
- 20: COVER PART
- 30: STICKY SHEET
- 40: ENTRANCE
- 40a: CENTRAL OPENING
- 40b: CURVED OPENING
- 40c: ELONGATED OPENING
- 50: PRESSING PORTION
- 60: ACCOMMODATION PORTION
- 100: FLYING INSECT TRAP
- 200: FLYING INSECT TRAP
- P: BACKGROUND REGION
- Q: ISLAND-LIKE PORTION
- Q1: CIRCULAR ISLAND-LIKE PORTION
- Q2: ELLIPTICAL ISLAND-LIKE PORTION
- Q3: SEMI-CIRCULAR ISLAND-LIKE PORTION
- S: INTERNAL SPACE

## Claims

1. A flying insect trap (100, 200) for attracting and catching a flying insect, comprising:
a sticky sheet (30) for sticking to the flying insect;
a main part (10) on which the sticky sheet (30) is placed;
a cover part (20) which is attached to cover the sticky sheet (30); and
an entrance (40) provided in the cover part (20), configured so that the flying insect enters through the entrance (40), wherein
the flying insect trap (100, 200) is configured so that, when the cover part (20) is attached to the main part (10), an internal space (S) which accommodates the sticky sheet (30) is formed between the main part (10) and the cover part (20), and the internal space (S) is in communication with an external environment infested with the flying insect through the entrance (40),
**characterized in that**
the sticky sheet (30) has an islands-in-sea pattern including a background region (P) having a color of Hue No. n₁ having a value of 4 (reddish orange) to 5 (orange) of the PCCS color wheel, and
a plurality of island-like portions (Q) having a color of Hue No. having a value of n₁+2 to n₁+4 and being limited to a color of Hue No. 7 (reddish yellow) to 9 (greenish yellow) of the PCCS color wheel.

2. The flying insect trap (100, 200) of claim 1, **characterized in that**
in the islands-in-sea pattern, the island-like portion (Q) is a circular portion or elliptical portion having an average diameter of 3-20 mm.

3. The flying insect trap (100, 200) of any one of claim 1 or 2, **characterized in that**
in the islands-in-sea pattern, the number of the island-like portions (Q) in the background region (P) is at least eight.

4. The flying insect trap (100, 200) of any one of claims 1-3, **characterized in that**
the main part (10) and the cover part (20) are connected together by a hinge, and the flying insect trap (100, 200) is configured so that
the cover part (20) is attached to the main part (10) by rotating and folding the cover part (20) toward the main part (10) so that the cover part (20) is aligned with the main part (10) .

5. The flying insect trap (100, 200) of any one of claims 1-4, **characterized in that**
there are a plurality of the entrances (40) located symmetrically with respect to a perpendicular bisector of a width of the cover part (20).

6. The flying insect trap (100, 200) of any one of claims 1-5, **characterized in that**
there are a plurality of the entrances (40) located on concentric circles having a center at an intersection of a perpendicular bisector of a width of the cover part (20) and a perpendicular bisector of a length of the cover part (20).

7. The flying insect trap (100, 200) of any one of claims 1-6, **characterized in that**
each of the entrances (40) has an opening area of 2-12 cm².

8. The flying insect trap (100, 200) of any one of claims 1-7, **characterized in that** it comprises:
a support portion 13, wherein the flying insect trap (100, 200) is configured so that
the support portion (13) supports the cover part (20) when the cover part (20) is attached to the main part (10), while the cover part (20) is curved in a direction away from the main part (10).

9. The flying insect trap (100, 200) of claim 8, **characterized in that**
the support portion (13) is configured to position the cover part (20) up to 1.5-4 cm away from the main part (10).

10. The flying insect trap (100, 200) of any one of claims 1-9, **characterized in that** it comprises a pressing portion (50), wherein
the flying insect trap (100, 200) is configured so that
the pressing portion (50) holds the sticky sheet (30) placed on the main part (10) in place when the cover part (20) is attached to the main part (10).

11. The flying insect trap (100, 200) of any one of claims 1-10, **characterized in that**
the main part (10) includes a hook portion (14) for hanging up the flying insect trap (100, 200).

12. The flying insect trap (100, 200) of any one of claims 1-11, **characterized in that**
the cover part (20) includes an accommodation portion (60) which accommodates an attracting agent for attracting the flying insect, and the attracting agent contains, as a flying insect attracting component, at least one selected from the groups consisting of acetic acid, fruit vinegars, grain vinegars, fruits, alcoholic beverages, sugars, and flavors thereof.

13. The flying insect trap (100, 200) of claim 12, **characterized in that**
the attracting agent further contains, as a flying insect attracting component, at least one selected from the group consisting of fish sauce and isopropyl alcohol.

## Patentansprüche

1. Fluginsektenfalle (100, 200) zum Anlocken und Fangen eines Fluginsekts, umfassend:
ein klebriges Blatt (30) zum Kleben an dem Fluginsekt,
ein Hauptteil (10), auf dem das klebrige Blatt (30) platziert ist,
ein Abdeckteil (20), das angebracht ist, um das klebrige Blatt (30) abzudecken, und
einen Eingang (40), der in dem Abdeckteil (20) bereitgestellt ist, der derart ausgestaltet ist, dass das Fluginsekt durch den Eingang (40) hineingelangt, wobei
die Fluginsektenfalle (100, 200) derart ausgestaltet ist, dass, wenn das Abdeckteil (20) an dem Hauptteil (10) angebracht ist, ein Innenraum (S), der das klebrige Blatt (30) in sich aufnimmt, zwischen dem Hauptteil (10) und dem Abdeckteil (20) gebildet ist, und der Innenraum (S) über den Eingang (40) in Verbindung mit einer Außenumgebung steht, die von dem Fluginsekt befallen ist, **dadurch gekennzeichnet, dass**
das klebrige Blatt (30) ein Inseln-im-Meer-Muster aufweist, das einen Hintergrundbereich (P) mit einer Farbe des Farbtons Nr. n₁ mit einem Wert von 4 (rotorange) bis 5 (orange) des PCCS-Farbkreises beinhaltet, und
mehrere inselartige Abschnitte (Q) eine Farbe einer Farbtonnummer mit einem Wert von n₁+2 bis n₁+4 aufweisen und auf eine Farbe des Farbtons Nr. 7 (rot-gelb) bis 9 (grün-gelb) des PCCS-Farbkreises begrenzt sind.

2. Fluginsektenfalle (100, 200) nach Anspruch 1, **dadurch gekennzeichnet, dass**
in dem Inseln-im-Meer-Muster der inselartige Abschnitt (Q) ein kreisrunder Abschnitt oder elliptischer Abschnitt mit einem durchschnittlichen Durchmesser von 3-20 mm ist.

3. Fluginsektenfalle (100, 200) nach einem der Ansprüche 1 oder 2, **dadurch gekennzeichnet, dass**
in dem Inseln-im-Meer-Muster die Anzahl der inselartigen Abschnitte (Q) in dem Hintergrundbereich (P) mindestens acht beträgt.

4. Fluginsektenfalle (100, 200) nach einem der Ansprüche 1 - 3, **dadurch gekennzeichnet, dass**
das Hauptteil (10) und das Abdeckteil (20) durch ein Gelenk miteinander verbunden sind und die Fluginsektenfalle (100, 200) derart ausgestaltet ist, dass
das Abdeckteil (20) durch Drehen und Falten des Abdeckteils (20) hin zu dem Hauptteil (10), so dass das Abdeckteil (20) mit dem Hauptteil (10) bündig ist, an dem Hauptteil (10) angebracht ist.

5. Fluginsektenfalle (100, 200) nach einem der Ansprüche 1 - 4, **dadurch gekennzeichnet, dass**
mehrere der Eingänge (40) vorhanden sind, die symmetrisch in Bezug auf eine Mittelsenkrechte einer Breite des Abdeckteils (20) angeordnet sind.

6. Fluginsektenfalle (100, 200) nach einem der Ansprüche 1 - 5, **dadurch gekennzeichnet, dass**
mehrere der Eingänge (40) vorhanden sind, die auf konzentrischen Kreisen mit einem Mittelpunkt an einem Schnittpunkt einer Mittelsenkrechten einer Breite des Abdeckteils (20) und einer Mittelsenkrechten einer Länge des Abdeckteils (20) angeordnet sind.

7. Fluginsektenfalle (100, 200) nach einem der Ansprüche 1 - 6, **dadurch gekennzeichnet, dass**
jeder der Eingänge (40) eine Öffnungsfläche von 2 bis 12 cm² aufweist.

8. Fluginsektenfalle (100, 200) nach einem der Ansprüche 1 - 7, **dadurch gekennzeichnet, dass** sie umfasst:
einen Trägerabschnitt 13, wobei die Fluginsektenfalle (100, 200) derart ausgestaltet ist, dass
der Trägerabschnitt (13) das Abdeckteil (20) trägt, wenn das Abdeckteil (20) an dem Hauptteil (10) angebracht ist, während das Abdeckteil (20) in eine Richtung weg von dem Hauptteil (10) gekrümmt ist.

9. Fluginsektenfalle (100, 200) nach Anspruch 8, **dadurch gekennzeichnet, dass**
der Trägerabschnitt (13) dazu ausgestaltet ist, das Abdeckteil (20) bis zu 1,5 - 4 cm von dem Hauptteil (10) entfernt zu positionieren.

10. Fluginsektenfalle (100, 200) nach einem der Ansprüche 1 - 9, **dadurch gekennzeichnet, dass** sie einen Pressabschnitt (50) umfasst, wobei
die Fluginsektenfalle (100, 200) derart ausgestaltet ist, dass
der Pressabschnitt (50) das klebrige Blatt (30), das auf dem Hauptteil (10) platziert ist, an Ort und Stelle hält, wenn das Abdeckteil (20) an dem Hauptteil (10) angebracht ist.

11. Fluginsektenfalle (100, 200) nach einem der Ansprüche 1 - 10, **dadurch gekennzeichnet, dass**
das Hauptteil (10) einen Hakenabschnitt (14) zum Aufhängen der Fluginsektenfalle (100, 200) beinhaltet.

12. Fluginsektenfalle (100, 200) nach einem der Ansprüche 1 - 11, **dadurch gekennzeichnet, dass**
das Abdeckteil (20) einen Aufnahmeabschnitt (60) beinhaltet, der einen Lockstoff zum Anlocken des Fluginsekts aufnimmt, und der Lockstoff als einen Fluginsekten anlockenden Bestandteil mindestens einen enthält, der aus der aus Essigsäure, Fruchtessigen, Getreideessigen, Früchten, alkoholischen Getränken, Zuckern und Aromen davon bestehenden Gruppe ausgewählt ist.

13. Fluginsektenfalle (100, 200) nach Anspruch 12, **dadurch gekennzeichnet, dass**
der Lockstoff ferner als einen Fluginsekten anlockenden Bestandteil mindestens einen enthält, der aus der Gruppe ausgewählt ist, die aus Fischsauce und Isopropylalkohol besteht.

## Revendications

1. Piège à insectes volants (100, 200) pour attirer et attraper un insecte volant, comprenant :
une feuille collante (30) destinée à se coller à l'insecte volant,
une partie principale (10) sur laquelle la feuille collante (30) est placée ;
une partie de couvercle (20) qui est fixée pour recouvrir la feuille collante (30), et
une entrée (40) prévue dans la partie de couvercle (20), configurée de sorte que l'insecte volant pénètre par l'entrée (40), dans lequel :
le piège à insectes volants (100, 200) est configuré de sorte que, lorsque la partie de couvercle (20) est fixée à la partie principale (10), un espace interne (S) qui loge la feuille collante (30), est formé entre la partie principale (10) et la partie de couvercle (20), et l'espace interne (S) est en communication avec l'environnement externe infesté par l'insecte volant, par le biais de l'entrée (40),
**caractérisé en ce que** :
la feuille collante (30) a un motif d'iles en mer comprenant une région d'arrière plan (P) ayant une teinte chromatique numéro n₁ ayant une valeur de 4 (orange rougeâtre) à 5 (orange) de la roue chromatique PCCS, et
une pluralité de parties en forme d'ile (Q) ayant une teinte chromatique ayant une valeur de n₁ + 2 à n₁ + 4 et étant limitée à une teinte chromatique numéro 7 (jaune rougeâtre) à 9 (jaune verdâtre) de la roue chromatique PCCS.

2. Piège à insectes volants (100, 200) selon la revendication 1, **caractérisé en ce que** :
dans le motif d'iles en mer, la partie en forme d'ile (Q) est une partie circulaire ou une partie elliptique ayant un diamètre moyen de 3 à 20 mm.

3. Piège à insectes volants (100, 200) selon l'une quelconque des revendications 1 ou 2, **caractérisé en ce que** :
dans le motif d'iles en mer, le nombre de parties en forme d'ile (Q) dans la région d'arrière plan (P) est d'au moins huit.

4. Piège à insectes volants (100, 200) selon l'une quelconque des revendications 1 à 3, **caractérisé en ce que** :
la partie principale (10) et la partie de couvercle (20) sont raccordées par une charnière, et le piège à insectes volants (100, 200) est configuré de sorte que :
la partie de couvercle (20) est fixée sur la partie principale (10) en faisant tourner et en pliant la partie de couvercle (20) vers la partie principale (10) de sorte que la partie de couvercle (20) est alignée avec la partie principale (10).

5. Piège à insectes volants (100, 200) selon l'une quelconque des revendications 1 à 4, **caractérisé en ce que** :
il y a une pluralité d'entrées (40) positionnées symétriquement par rapport à une bissectrice perpendiculaire d'une largeur de la partie de couvercle (20).

6. Piège à insectes volants (100, 200) selon l'une quelconque des revendications 1 à 5, **caractérisé en ce que** :
il y a une pluralité d'entrées (40) positionnées sur des cercles concentriques ayant un centre au niveau d'une intersection d'une bissectrice perpendiculaire d'une largeur de la partie de couvercle (20) et une bissectrice perpendiculaire d'une longueur de la partie de couvercle (20).

7. Piège à insectes volants (100, 200) selon l'une quelconque des revendications 1 à 6, **caractérisé en ce que** :
chacune des entrées (40) a une surface d'ouverture de 2 à 12 cm².

8. Piège à insectes volants (100, 200) selon l'une quelconque des revendications 1 à 7, **caractérisé en ce qu'**il comprend :
une partie de support (13), dans lequel le piège à insectes volants (100, 200) est configuré de sorte que :
la partie de support (13) supporte la partie de couvercle (20) lorsque la partie de couvercle (20) est fixée sur la partie principale (10), alors que la partie de couvercle (20) est incurvée dans une direction à l'opposé de la partie principale (10).

9. Piège à insectes volants (100, 200) selon la revendication 8, **caractérisé en ce que** :
la partie de support (13) est configurée pour positionner la partie de couvercle (20) jusqu'à 1,5 à 4 cm à l'opposé de la partie principale (10).

10. Piège à insectes volants (100, 200) selon l'une quelconque des revendications 1 à 9, **caractérisé en ce qu'**il comprend une partie de pression (50), dans lequel :
le piège à insectes volants (100, 200) est configuré de sorte que la partie de pression (50) maintient la feuille collante (30) placée sur la partie principale (10) en place lorsque la partie de couvercle (20) est fixée sur la partie principale (10).

11. Piège à insectes volants (100, 200) selon l'une quelconque des revendications 1 à 10, **caractérisé en ce que** :
la partie principale (10) comprend une partie de crochet (14) pour suspendre le piège à insectes volants (100, 200).

12. Piège à insectes volants (100, 200) selon l'une quelconque des revendications 1 à 11, **caractérisé en ce que** :
la partie de couvercle (20) comprend une partie de logement (60) qui loge un agent d'attraction pour attirer l'insecte volant, et l'agent d'attraction contient, en tant que composant d'attraction d'insecte volant, au moins un élément sélectionné dans les groupes comprenant l'acide acétique, les vinaigres de fruits, les vinaigres de céréales, les fruits, les boissons alcoolisées, les sucres et leurs arômes.

13. Piège à insectes volants (100, 200) selon la revendication 12, **caractérisé en ce que** :
l'agent d'attraction contient en outre, en tant que composant d'attraction d'insecte volant, au moins un élément sélectionné dans le groupe comprenant du nuoc-mâm et de l'alcool isopropylique.
